# EUROPEAN PATENT APPLICATION

(11) **EP 2 439 251 A1**
(43) Date of publication of application: **11.04.2012**
(21) Application number: 09845398.8
(22) Date of filing: 04.06.2009
(51) Int. Cl.: C09K 11/79

(54) **GREEN LUMINESCENT MATERIALS AND THEIR PREPARING METHODS**

(71) Applicant: Ocean's King Lighting Science&Technology Co., Ltd., Guangdong 518052 (CN)
(72) Inventor: ZHOU, Mingjie, Guangdong 518052 (CN); MA, Wenbo, Guangdong 518052 (CN); SHI, Zhaopu, Guangdong 518052 (CN)
(74) Representative: De Baere, Ivo
(86) International application number: PCT/CN2009/072123
(87) International publication number: WO 2010/139117

(57) **Abstract**

Green luminescent materials and their preparing methods. The luminescent materials are the compounds of the following general formula: M₃Y₁₋ₓTbₓSi₃O₉ or M₅Y₁₋ₓTbₓSi₄O₁₂, wherein 0<x≤1 and M is one of Na, K and Li, or wherein Y is replaced by one of Gd, Sc, Lu and La in part or in whole. The luminescent materials are prepared by Sol-Gel method, microwave synthesis or high temperature solid phase method using one of oxide, chloride, nitrite, carbonate or oxalate of Y³⁺, one of oxide, chloride, nitrate, carbonate and oxalate of Tb³⁺ and SiO₂ as raw materials. The materials of the present invention have high stability, high color purity and high luminous efficiency and the preparing methods are easy to conduct, which have high product quality and low cost, and may be widely used in luminescent materials production.

## Description

### FIELD OF THE INVENTION

The present invention relates to a luminescent material and its preparing method, more particularly, to a green luminescent material and its preparing method.

### BACKGROUND OF THE INVENTION

In the 1960s, Ken Shoulder put forward a hypothesis of a cathode ray micro device on the basis of the field emission cathode assay (FEAs). Accordingly, the research on the design and manufacture of panel displays and light source devices utilizing FEAs have aroused people's great interest. The operating principle of the new-type field emission device of this type is similar to that of the traditional cathode-ray tube (CRT), which achieves imaging or lighting applications through the bombardment of the cathode ray on red, green and blue three-colored fluorescent powder. There are potential advantages in the aspects of luminosity, visual angle, response time, operating temperature range and energy consumption for a device of this type.

One key factor to manufacture a field emission device with excellent performance is the preparation of high-performance fluorescent powder. At present, the fluorescent materials applied in a field emission device are mainly sulfides, oxides and sulfur oxides fluorescent powders for traditional cathode-ray tube and projection television kinescope. For sulfides and sulfur oxides fluorescent powders, they have higher brightness and certain conductivity. However, they are easy to decompose when bombarded by a large beam of cathode ray, thus releasing elementary sulfur to "poison" the cathode needle point and generating any other precipitate to cover the surface of the fluorescent powder, which would reduce the luminous efficiency of the fluorescent powder and the service life of the field emission device. The oxides fluorescent powder has high stability, but their luminous efficiency is not high enough and they are generally insulators. Accordingly performances of both sulfides and sulfur oxides fluorescent powder and oxides fluorescent powder are required to be improved and enhanced.

### SUMMARY OF THE INVENTION

The objective of the present invention is to provide a green luminescent material which has high stability and high luminous efficiency and can emit a green light when excited by the cathode ray, aiming at the problems in the prior art that the sulfides and sulfur oxides fluorescent powders are easy to decompose when bombarded by a large beam of cathode ray, thus releasing elementary sulfur to "poison" the cathode needle point and generating any other precipitate to cover the surface of the fluorescent powder, which would reduce the luminous efficiency of the fluorescent powder and the service life of the field emission device, and the problems in the prior art that the oxides fluorescent powder has luminous efficiency which is not high enough and no conductivity.

Another objective of the present invention is to provide a preparing method for green luminescent material which is easy to conduct, has high product quality and low cost and can be widely used in luminescent material production.

According to an aspect, first green luminescent materials are compounds of a following general formula: M₃Y₁₋ₓTbₓSi₃O₉ or M₅Y₁₋ₓTbₓSi₄O₁₂, wherein a range of x is 0<x≤1 and M is one selected from a group of Na, K and Li; wherein the range of x is preferably 0.1≤x≤0.6.

Second green luminescent materials are compounds of a following general formula: M₃Y₁₋ₓTbₓSi₃O₉ or M₅Y₁₋ₓTbₓSi₄O₁₂, wherein a range of x is 0<x≤1, M is one selected from a group of Na, K and Li, and Y is replaced by one of Gd, Sc, Lu and La in part or in whole; wherein the range of x is preferably 0.1≤x≤0.6.

According to another aspect, a preparing method for the first green luminescent materials is provided, which comprises following steps:
(1) taking silicate of M⁺, one of oxide, chloride, nitrate, carbonate or oxalate of Y³⁺, one of oxide, chloride, nitrate, carbonate and oxalate of Tb³⁺ and SiO₂ as raw materials, weighing the raw materials in accordance with a molar ratio of each element in the chemical formula of M₃Y₁₋ₓTbₓSi₃O₉ or M₅Y₁₋ₓTbₓSi₄O₁₂, wherein the range of x is 0<x≤1 and M is one selected from a group of Na, K and Li;
(2) dissolving the raw materials in a hydrochloric acid or a nitric acid to form a solution when taking the oxide, carbonate or oxalate of Y³⁺ and the oxide, carbonate or oxalate of Tb³⁺ as the raw materials in step (1); directly dissolving the raw materials in water to form a solution when taking the chloride or nitrite of Y³⁺ and the chloride or nitrite of Tb³⁺ as the raw materials;
(3) dissolving the silicate of M⁺ in water, adding the SiO₂ with stirring, then adding the solution in step (2) slowly with stirring, keeping stirring for 0.5∼1.5h to obtain a sol, heating the sol at 100∼150 °C for 4∼24 h and then obtaining a xerogel;
(4) grinding the xerogel into powder, calcining the powder at a constant temperature for 4∼20 h after the temperature has been risen to 900∼1200°C at a heating rate of 60∼1000°C/h and then obtaining the green luminescent materials;
or else, grinding the xerogel into powder, processing the powder for 5-30 min under microwave with a frequency of 2450MHz and a power of 500∼1000W and then obtaining the green luminescent materials;
wherein the step (4) preferably comprises: grinding the xerogel into powder, calcining the powder at a constant temperature for 6∼15 h after the temperature has been risen to 1000∼1150°C at a heating rate of 300∼800°C/h and then obtaining

the green luminescent materials.

According to another aspect, a preparing method for the second green luminescent materials is provided, which comprising following steps:
(1) taking silicate of M⁺, one of oxide, chloride, nitrate, carbonate or oxalate of Y³⁺, one of oxides, chloride, nitrate, carbonate and oxalate of Tb³⁺ and SiO₂ as raw materials, weighing the raw materials in accordance with a molar ratio of each element in the chemical formula of M₃Y₁₋ₓTbₓSi₃O₉ or M₅Y₁₋ₓTbₓSi₄O₁₂, wherein the range of x is 0<x≤1 and M is one selected from a group of Na,K and Li;
(2) dissolving the raw materials in a hydrochloric acid or a nitric acid to form a solution when taking the oxide, carbonate or oxalate of Y³⁺ and the oxide, carbonate or oxalate of Tb³⁺ as the raw materials in step (1); directly dissolving the raw materials in water to form a solution when taking the chloride or nitrite of Y³⁺ and the chloride or nitrite of Tb³⁺ as the raw materials;
(3) dissolving the silicate of M⁺ in water, adding the SiO₂ with stirring, then adding the solution in step (2) slowly with stirring, keeping stirring for 0.5∼1.5h to obtain a sol, heating the sol at 100∼150 °C for 4∼24 h and then obtaining a xerogel;
(4) grinding the xerogel into powder, calcining the powder at a constant temperature for 4∼20 h after the temperature has been risen to 900∼1200°C at a heating rate of 60∼1000°C/h and then obtaining the green luminescent materials;
or else, grinding the xerogel into powder, processing the powder for 5-30 min under microwave with a frequency of 2450MHz and a power of 500∼1000W and then obtaining the green luminescent materials;
Y³⁺ in the step (1) and (2) is replaced by one of Gd³⁺, Sc³⁺, Lu³⁺ and La³⁺ in part or in whole;
wherein the step (4) preferably comprises: grinding the xerogel into powder, calcining the powder at a constant temperature for 6∼15 h after the temperature has been risen to 1000∼1150°C at a heating rate of 300∼800°C/h and then obtaining the green luminescent materials.

According to another aspect, another preparing method for the first green luminescent materials is provided, which comprising following steps:
(1) taking one of silicate and oxalate of M⁺, one of oxides, chloride, nitrate, carbonate or oxalate of Y³⁺, one of oxides, chloride, nitrate, carbonate and oxalate of Tb³⁺ and SiO₂ as raw materials, weighing the raw materials in accordance with a molar ratio of each element in the chemical formula of M₃Y₁₋ₓTbₓSi₃O₉ or M₅Y₁₋ₓTbₓSi₄O₁₂, wherein the range of x is 0<x≤1 and M is one selected from a group of Na,K and Li;
(2) grinding the raw materials into powder, sintering the powder at 1000∼1200°C for 4∼20 h, cooling the powder to room temperature and then obtaining the green luminescent materials.

According to another aspect, another preparing method for the second green luminescent materials, the method comprising the following steps:
(1) taking one of silicate and oxalate of M⁺, one of oxide, chloride, nitrate, carbonate or oxalate of Y³⁺, one of oxide, chloride, nitrate, carbonate and oxalate of Tb³⁺ and SiO₂ as raw materials, weighing the raw materials in accordance with a molar ratio of each element in the chemical formula of M₃Y₁₋ₓTbₓSi₃O₉ or M₅Y₁₋ₓTbₓSi₄O₁₂, wherein the range of x is 0<x≤1, M is one selected from a group of Na, K and Li and Y³⁺ is replaced by one of Gd³⁺, Sc³⁺, Lu³⁺ and La³⁺ in part or in whole ;
(2) grinding the raw materials into powder, sintering the powder at 1000∼1200°C for 4∼20 h, cooling the powder to room temperature and then obtaining the green luminescent materials.

The luminescent material of the present invention is the silicate green luminescent material doped with Tb³⁺ and Y³⁺. Such material has features of high stability, high color purity and high luminous efficiency, and can emit a green light when excited by the cathode ray.

The green luminescent material prepared by the replacement of Tb³⁺ and Y³⁺ by one of Gd³⁺, Sc³⁺, Lu³⁺ and La³⁺ in part or in whole also has features of high stability, high color purity and high luminous efficiency, and can emit a green light when excited by the cathode ray.

For the preparing method of the present invention, the process is relatively easy with few processing steps and process conditions easily to realize. None impurity is introduced in the present method to achieve a high product quality. The cost is low as a result of the non-rough process condition, thus the method can be widely applied in luminescent material production.

### BRIEF DESCRIPTION OF THE DRAWINGS

The present invention will be further described with reference to the accompanying drawings and embodiments in the following. In the Figures:
Figure 1 is the comparison diagram for the cathodoluminescence spectra of existing commercial green fluorescent powder (ZnS: Cu, Au, Al) and the sodium silicate luminescent material doped with rare earth ions prepared in the example 27;
Figure 2 is the comparison diagram for the cathodoluminescence spectra's of existing commercial green fluorescent powder (ZnS: Cu, Au, Al) and the sodium silicate luminescent material doped with rare earth ions prepared in the example 34;
wherein the Shimadzu RF-5301 spectrometer is used for the luminescent spectrum determination. The test condition is as follows: the excitation voltage of the cathode ray is 7.5 kV.

### DETAILED DESCRIPTION OF THE PREFERRED EMBODIMENT

### Example 1: Na₃Y_{0.9}Tb_{0.1}Si₃O₉ prepared by Sol-Gel method

At room temperature, 0.9 mmol Y(NO₃)₃ and 0.1 mmol Tb(NO₃)₃ are dissolved in 2 ml deionized water in a vessel as a standby rare earth solution. 1.5 mmol SiO₂ are added into 1.22g Na₂SiO₃ solution with a mass percent concentration of 15% with stirring. After that, the prepared rare earth solution is slowly added while keeping stirring, so that the molar ratio of the alkali metal Na ion, the sum of the Y ion and Tb ion of rare earth ions and the silicon in the mixed solution is 3:1:3. A sol is obtained through continuous stirring for 1h. Then the obtained sol is dried at 120°C for 12h to volatilize the solvent and obtain a xerogel. Subsequently, the xerogel is ground into powder and placed in a corundum crucible. Afterwards, the powder is placed into a high temperature furnace, in which the temperature is risen to 1100°C at a heating rate of 100°C/h. The powder is calcined for 6 h at 1100°C therein, and the luminescent material Na₃Y_{0.9}Tb_{0.1}Si₃O₉ that can emit a green light when excited by the cathode ray is obtained after the following cooling and grinding.

### Example 2: Na₃Y_{0.5}Gd_{0.2}Tb_{0.3}Si₃O₉ prepared by Sol-Gel method

At room temperature, 0.5 mmol Y(NO₃)₃, 0.2 mmol Gd(NO₃)₃ and 0.3 mmol Tb(NO₃)₃ are dissolved in 2 ml deionized water in a vessel as a standby rare earth solution. The remaining steps are the same as those in example 1. Then the luminescent material Na₃Y_{0.5}Gd_{0.2}Tb_{0.3}Si₃O₉ which can emit a green light when excited by the cathode ray is obtained.

### Example 3: Na₃Y_{0.4}Tb_{0.6}Si₃O₉ prepared by Sol-Gel method

At room temperature, 0.4 mmol YCl₃ and 0.6 mmol TbCl₃ are dissolved in 2 ml deionized water in a vessel as standby. The remaining steps are the same as those in example 1. Then the luminescent material Na₃Y_{0.4}Tb_{0.6}Si₃O₉ which can emit a green light when excited by the cathode ray is obtained.

### Example 4: Na₃TbSi₃O₉ prepared by Sol-Gel method

At room temperature, 1 mmol Tb(NO₃)₃ is dissolved in 2 ml deionized water in a vessel as standby. The remaining steps are the same as those in example 1. Then the luminescent material Na₃TbSi₃O₉ which can emit a green light when excited by the cathode ray is obtained.

### Example 5: K₃Sc_{0.74}Tb_{0.26}Si₃O₉ prepared by Sol-Gel method

At room temperature, 0.74 mmol Sc(NO₃)₃ and 0.26 mmol Tb(NO₃)₃ are dissolved in 2 ml deionized water in a vessel as a standby rare earth solution. 1.5 mmol SiO₂ are added into 1.55g K₂SiO₃ solution with a mass percent concentration of 15% with stirring. After that, the prepared rare earth solution is slowly added while keeping stirring, so that the molar ratio of the alkali metal K ion, the sum of the Sc ion and Tb ion of rare earth ions and the silicon in the mixed solution is 3:1:3. A sol is obtained through continuous stirring for 0.5h. Then the obtained sol is dried at 100°C for 24h to volatilize the solvent and obtain a xerogel. Subsequently, the xerogel is ground into powder and placed in a corundum crucible. Afterwards, the powder is placed into a high temperature furnace, in which the temperature is risen to 1200°C at a heating rate of 800°C/h. The powder is calcined for 4 h at 1200 °C therein, and the luminescent material K₃Sc₀.₇₄Tb_{0.26}Si₃O₉ that can emit a green light when excited by the cathode ray is obtained after the following cooling and grinding.

### Example 6: Li₃Y_{0.74}Tb_{0.26}Si₃O₉ prepared by Sol-Gel method

At room temperature, 0.37 mmol Y₂(C₂O₄)₃ and 0.13 mmol Tb₂(C₂O₄)₃ are dissolved in 0.21 ml analytically pure concentrated nitric acid in a vessel as a standby rare earth solution. 1.22g Na₂SiO₃ solution with a mass percent concentration of 15% is replaced with 0.9g Li₂SiO₃ solution with a mass percent concentration of 15%. The remaining steps are the same as those in example 1. Then the luminescent material Li₃Y_{0.74}Tb_{0.26}Si₃O₉ which can emit a green light when excited by the cathode ray is obtained.

### Example 7: Na₅Y_{0.8}Lu_{0.1}Tb_{0.1}Si₄O₁₂ prepared by Sol-Gel method

At room temperature, 0.4 mmol Y₂O₃, 0.05 mmol Lu₂O₃ and 0.025 mmol Tb₄O₇ are dissolved in 0.3 ml analytically pure concentrated hydrochloric acid in a vessel as a standby rare earth solution. 1.5 mmol SiO₂ are added into 2.04g Na₂SiO₃ solution with a mass percent concentration of 15% with stirring. After that, the prepared rare earth solution is slowly added while keeping stirring, so that the molar ratio of the alkali metal Na ion, the sum of the Y ion, Lu ion and Tb ion of rare earth ions and the silicon in the mixed solution is 5:1:4. A sol is obtained through continuous stirring for 1.5h. Then the obtained sol is dried at 150°C for 4h to volatilize the solvent and obtain a xerogel. Subsequently, the xerogel is ground into powder and placed in a corundum crucible. Afterwards, the powder is placed into a high temperature furnace, in which the temperature is risen to 900°C at a heating rate of 60°C/h. The powder is calcined for 20 h at 900°C therein, and the luminescent material Na₅Y_{0.8}Lu_{0.1}Tb_{0.1}Si₄O₁₂ that can emit a green light when excited by the cathode ray is obtained after the following cooling and grinding.

### Example 8: Na₅TbSi₄O₁₂ prepared by Sol-Gel method

At room temperature, 1 mmol Tb(NO₃)₃ is dissolved in 2 ml deionized water in a vessel as a standby rare earth solution. 1.5 mmol SiO₂ are added into 2.04g Na₂SiO₃ solution with a mass percent concentration of 15% with stirring. After that, the prepared rare earth solution is slowly added while keeping stirring, so that the molar ratio of the alkali metal Na ion, the rare earth Tb ion and the silicon in the mixed solution is 5:1:4. A sol is obtained through continuous stirring for 1.5h. Then the obtained sol is dried at 100°C for 16h to volatilize the solvent and obtain a xerogel. Subsequently, the xerogel is ground into powder and placed in a corundum crucible. Afterwards, the powder is placed into a high temperature furnace, in which the temperature is risen to 1150°C at a heating rate of 300°C/h. The powder is calcined for 6 h at 1150°C therein, and the luminescent material Na₅TbSi₄O₁₂ that can emit a green light when excited by the cathode ray is obtained.

### Example 9: K₅Y_{0.1}La_{0.8}Tb_{0.1}Si₄O₁₂ prepared by Sol-Gel method

At room temperature, 0.1 mmol YCl₃, 0.8 mmol LaCl₃ and 0.1 mmol TbCl₃ are dissolved in 2 ml deionized water in a vessel as a standby rare earth solution. 1.5 mmol SiO₂ are added into 2.57g K₂SiO₃ solution with a mass percent concentration of 15% with stirring. After that, the prepared rare earth solution is slowly added while keeping stirring, so that the molar ratio of the alkali metal K ion, the sum of Y ion, La ion and Tb ion of rare earth ions and the silicon in the mixed solution is 5:1:4. A sol is obtained through continuous stirring for 1.5h. Then the obtained sol is dried at 140°C for 6h to volatilize the solvent and obtain a xerogel. Subsequently, the xerogel is ground into powder and placed in a corundum crucible. Afterwards, the powder is placed into a high temperature furnace, in which the temperature is risen to 1150°C at a heating rate of 1000°C/h. The powder is calcined for 8 h at 1150°C therein, and the luminescent material K₅Y_{0.1}La_{0.8}Tb_{0.1}Si₄O₁₂ that can emit a green light when excited by the cathode ray is obtained after a following cooling and grinding.

### Example 10: Li₅Y_{0.99}Tb_{0.01}Si₄O₁₂ prepared by Sol-Gel method

At room temperature, 0.495 mmol Y₂(CO₃)₃ and 0.005 mmol Tb₂(CO₃)₃ are dissolved in 0.3 ml analytically pure concentrated hydrochloric acid in a vessel as a standby rare earth solution. 2.04g Na₂SiO₃ solution with a mass percent concentration of 15% is replaced with 1.5g Li₂SiO₃ solution with a mass percent concentration of 15%. The remaining steps are the same as those in example 7. Then the luminescent material Li₅Y_{0.99}Tb_{0.01}Si₄O₁₂ which can emit a green light when excited by the cathode ray is obtained.

### Example 11: Na₃Y_{0.9}Tb_{0.1}Si₃O₉ prepared by microwave synthesis method

At room temperature, 0.9 mmol Y(NO₃)₃ and 0.1 mmol Tb(NO₃)₃ are dissolved in 2 ml deionized water in a vessel as a standby rare earth solution. 1.5 mmol SiO₂ are added into 1.22g Na₂SiO₃ solution with a mass percent concentration of 15% with stirring. After that, the prepared rare earth solution is slowly added while keeping stirring, so that the molar ratio of the alkali metal Na ion, the sum of the Y ion and Tb ion of rare earth ions and the silicon in the mixed solution is 3:1:3. A sol is obtained through continuous stirring for 1h. Then the obtained sol is dried at 120°C for 12h to volatilize the solvent and obtain a xerogel. Subsequently, the xerogel is ground into powder and placed in a corundum crucible. Afterwards, the corundum crucible is placed in another larger crucible filled with Fe₂O₃ which is covered with a cap thereafter. Such device is placed into a microwave oven (the frequency and maximum output power of which are respectively 2450 MHz and 1000W) and processed for 10 min with a power of 700 W therein. Then the luminescent material Na₃Y_{0.9}Tb_{0.1}Si₃O₉ that can emit a green light when excited by the cathode ray is obtained after the following cooling and grinding.

### Example 12: Na₃Y_{0.2}La_{0.3}Tb_{0.5}Si₃O₉ prepared by microwave synthesis method

At room temperature, 0.2 mmol YCl₃, 0.3 mmol LaCl₃ and 0.5 mmol TbCl₃ are dissolved in 2 ml deionized water in a vessel as a standby rare earth solution. The remaining steps are the same as those in example 11. Then the luminescent material Na₃Y_{0.2}La_{0.3}Tb_{0.5}Si₃O₉ that can emit a green light when excited by the cathode ray is obtained.

### Example 13: Na₃Y_{0.4}Tb_{0.6}Si₃O₉ prepared by microwave synthesis method

At room temperature, 0.2 mmol Y₂(C₂O₄)₃ and 0.3 mmol Tb₂(C₂O₄)₃ are dissolved in 0.21 ml analytically pure nitric acid in a vessel as standby rare earth solution. The remaining steps are the same as those in example 11. Then the luminescent material Na₃Y_{0.4}Tb_{0.6}Si₃O₉ that can emit a green light when excited by the cathode ray is obtained.

### Example 14: Na₃TbSi₃O₉ prepared by microwave synthesis method

At room temperature, 1 mmol Tb(NO₃)₃ are dissolved in 2 ml deionized water in a vessel as a standby rare earth solution. 1.5 mmol SiO₂ are added into 1.22g Na₂SiO₃ solution with a mass percent concentration of 15% with stirring. After that, the prepared rare earth solution is slowly added while keeping stirring, so that the molar ratio of the alkali metal Na ion, the rare earth Tb ion and the silicon in the mixed solution is 3:1:3. A sol is obtained through continuous stirring for 1h. Then the obtained sol is dried at 120°C for 12h to volatilize the solvent and obtain a xerogel. Subsequently, the xerogel is ground into powder and placed in a corundum crucible. Afterwards, the corundum crucible is placed in another larger crucible filled with Fe₂O₃ which is covered with a cap thereafter. Such device is placed into a microwave oven (the frequency of which is 2450 MHz) and processed for 30 min with a power of 500 W therein. Then the luminescent material Na₃TbSi₃O₉ that can emit a green light when excited by the cathode ray is obtained after the following cooling and grinding.

### Example 15: K₃Y_{0.74}Tb_{0.26}Si₃O₉ prepared by microwave synthesis method

At room temperature, 0.37 mmol Y₂(CO₃)₃ and 0.13 mmol Tb₂(CO₃)₃ are dissolved in 0.3 ml analytically pure hydrochloric acid in a vessel as a standby rare earth solution. 1.22g Na₂SiO₃ solution with a mass percent concentration of 15% is replaced with 1.55g K₂SiO₃ with a mass percent concentration of 15%. The remaining steps are the same as those in example 11. Then the luminescent material K₃Y_{0.74}Tb_{0.26}Si₃O₉ that can emit a green light when excited by the cathode ray is obtained.

### Example 16: Li₃Y_{0.9}Sc_{0.05}Tb_{0.05}Si₃O₉ prepared by microwave synthesis method

At room temperature, 0.9 mmol Y(NO₃)₃, 0.05 mmol Sc(NO₃)₃ and 0.05 mmol Tb(NO₃)₃ are dissolved in 2 ml deionized water in a vessel as standby. 1.22g Na₂SiO₃ solution with a mass percent concentration of 15% is replaced with 0.9g Li₂SiO₃ with a mass percent concentration of 15%. The remaining steps are the same as those in example 11. Then the luminescent material Li₃Y_{0.9}Sc_{0.05}Tb_{0.05}Si₃O₉ that can emit a green light when excited by the cathode ray is obtained.

### Example 17: Na₅Gd_{0.9}Tb_{0.1}Si₄O₁₂ prepared by microwave synthesis method

At room temperature, 0.9 mmol Gd(NO₃)₃ and 0.1 mmol Tb(NO₃)₃ are dissolved in 2 ml deionized water in a vessel as a standby rare earth solution. 1.5 mmol SiO₂ are added into 2.04g Na₂SiO₃ solution with a mass percent concentration of 15% with stirring. After that, the prepared rare earth solution is slowly added while keeping stirring, so that the molar ratio of the alkali metal Na ion, the Gd ion and Tb ion of rare earth ions and the silicon in the mixed solution is 5:1:4. A sol is obtained through continuous stirring for 1h. Then the obtained sol is dried at 110°C for 14h to volatilize the solvent and obtain a xerogel. Subsequently, the xerogel is ground into powder and placed in a corundum crucible. Afterwards, the corundum crucible is placed in another larger crucible filled with Fe₂O₃ which is covered with a cap thereafter. Such device is placed into a microwave oven (the frequency and maximum output power of which are respectively 2450 MHz and 1000W) and processed for 5 min with a power of 1000 W therein. Then the luminescent material Na₅Gd_{0.9}Tb_{0.1}Si₄O₁₂ that can emit a green light when excited by the cathode ray is obtained after the following cooling and grinding.

### Example 18: Na₅Y_{0.74}Tb_{0.26}Si₄O₁₂ prepared by microwave synthesis method

At room temperature, 0.74 mmol YCl₃ and 0.26 mmol TbCl₃ are dissolved in 2 ml deionized water in a vessel as a standby rare earth solution. The remaining steps are the same as those in example 17. Then the luminescent material Na₅Y_{0.74}Tb_{0.26}Si₄O₁₂ that can emit a green light when excited by the cathode ray is obtained.

### Example 19: Na₅Y_{0.5}Tb_{0.5}Si₄O₁₂ prepared by microwave synthesis method

At room temperature, 0.25 mmol Y₂(C₂O₄)₃ and 0.25 mmol Tb₂(C₂O₄)₃ are dissolved in 0.21 ml analytically pure nitric acid in a vessel as a standby rare earth solution. The remaining steps are the same as those in example 17. Then the luminescent material Na₅Y_{0.5}Tb_{0.5}Si₄O₁₂ that can emit a green light when excited by the cathode ray is obtained.

### Example 20: Na₅Y_{0.4}Lu_{0.4}Tb_{0.2}Si₄O₁₂ prepared by microwave synthesis method

At room temperature, 0.4 mmol Y(NO₃)₃, 0.4 mmol Lu(NO₃)₃ and 0.2 mmol Tb(NO₃)₃ are dissolved in 2 ml deionized water in a vessel as a standby rare earth solution. The remaining steps are the same as those in example 17. Then the luminescent material Na₅Y_{0.4}Lu_{0.4}Tb_{1.2}Si₄O₁₂ that can emit a green light when excited by the cathode ray is obtained.

### Example 21: Na₅TbSi₄O₁₂ prepared by microwave synthesis method

At room temperature, 1 mmol Tb(NO₃)₃ are dissolved in 2 ml deionized water in a vessel as a standby rare earth solution. The remaining steps are the same as those in example 17. Then the luminescent material Na₅TbSi₄O₁₂ that can emit a green light when excited by the cathode ray is obtained.

### Example 22: K₅Y_{0.74}Tb_{0.26}Si₄O₁₂ prepared by microwave synthesis method

At room temperature, 0.37 mmol Y₂(CO₃)₃ and 0.13 mmol Tb₂(CO₃)₃ are dissolved in 0.3 ml analytically pure hydrochloric acid in a vessel as a standby rare earth solution. 2.04g Na₂SiO₃ solution with a mass percent concentration of 15% is replaced with 2.57g K₂SiO₃ with a mass percent concentration of 15%. The remaining steps are the same as those in example 17. Then the luminescent material K₅Y_{0.74}Tb_{0.26}Si₄O₁₂ that can emit a green light when excited by the cathode ray is obtained.

### Example 23: Li₅Y_{0.99}Tb_{0.01}Si₄O₁₂ prepared by microwave synthesis method

At room temperature, 0.99 mmol Y(NO₃)₃ and 0.01 mmol Tb(NO₃)₃ are dissolved in 2 ml deionized water in a vessel as a standby rare earth solution. 2.04g Na₂SiO₃ solution with a mass percent concentration of 15% is replaced with 1.5g Li₂SiO₃ with a mass percent concentration of 15%. The remaining steps are the same as those in example 17. Then the luminescent material Li₅Y_{0.99}Tb_{0.01}Si₄O₁₂ that can emit a green light when excited by the cathode ray is obtained.

### Example 24: Na₃Y_{0.9}Tb_{0.1}Si₃O₉ prepared by high temperature solid phase method

1.5 mmol Na₂CO₃, 0.45 mmol Y₂O₃, 0.025 mmol Tb₄O₇ and 3 mmol SiO₂ are placed in an agate mortar and ground to be uniform powder at room temperature. Then the powder is transferred to a corundum crucible and placed in a high temperature tube-type furnace with weak reducing atmosphere of 95% N₂ and 5% H₂ to be sintered at 1150°C for 10h. A generated product during sintering is then placed in a mortar and ground to be uniform after cooling the powder to room temperature. Then the luminescent material Na₃Y_{0.9}Tb_{0.1}Si₃O₉ which can emit a green light when excited by the cathode ray is obtained.

### Example 25: Na₃SC_{0.74}Tb_{0.26}Si₃O₉ prepared by high temperature solid phase method

1.5 mmol Na₂CO₃, 0.37 mmol Sc₂O₃, 0.065 mmol Tb₄O₇ and 3 mmol SiO₂ are placed in an agate mortar and ground to be uniform powder at room temperature. Then the powder is transferred to a corundum crucible and placed in a high temperature tube-type furnace with weak reducing atmosphere of 95% N₂ and 5% H₂ to be sintered at 1000°C for 20h. A generated product during sintering is then placed in a mortar and ground to be uniform after cooling the powder to room temperature. Then the luminescent material Na₃Sc_{0.74}Tb_{0.26}Si₃O₉ which can emit a green light when excited by the cathode ray is obtained.

### Example 26: Na₃Y_{0.1}Lu_{0.5}Tb_{0.4}Si₃O₉ prepared by high temperature solid phase method

1.5 mmol Na₂C₂O₄, 0.05 mmol Y₂O₃, 0.25 mmol Lu₂O₃, 0.1 mmol Tb₄O₇ and 3 mmol SiO₂ are placed in an agate mortar and ground to be uniform powder at room temperature. Then the powder is transferred to a corundum crucible and placed in a high temperature tube-type furnace with weak reducing atmosphere of 95% N₂ and 5% H₂ to be sintered at 1200°C for 4h. A generated product during sintering is then placed in a mortar and ground to be uniform after cooling the powder to room temperature. Then the luminescent material Na₃Y_{0.1}Lu_{0.5}Tb_{0.4}Si₃O₉ which can emit a green light when excited by the cathode ray is obtained.

### Example 27: Na₃Y_{0.6}Tb_{0.4}Si₃O₉ prepared by high temperature solid phase method

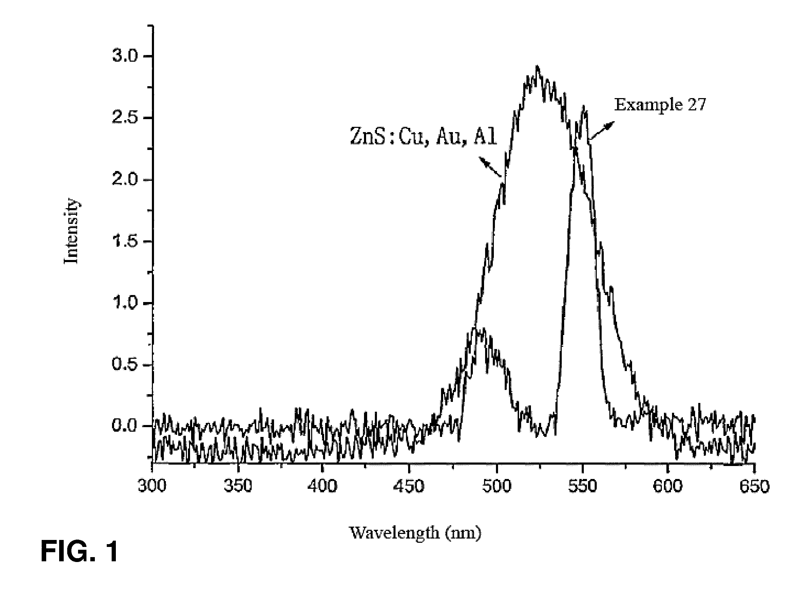

1.5 mmol Na₂CO₃, 0.3 mmol Y₂O₃, 0.1 mmol Tb₄O₇ and 3 mmol SiO₂ are placed in an agate mortar and ground to be uniform powder at room temperature. The remaining steps are the same as those in example 24. Then the luminescent material Na₃Y_{0.6}Tb_{0.4}Si₃O₉ which can emit a green light when excited by the cathode ray is obtained. As shown in Figure1, Figure 1 is the comparison diagram for the cathodoluminescence spectra's of existing commercial green fluorescent powder (ZnS: Cu, Au, Al) and the sodium silicate luminescent material doped with rare earth ions prepared in the example. Among them, the existing commercial green fluorescent powder (ZnS: Cu, Au, Al) is the ZnS green fluorescent powder doped with Cu, Au and Al ions. From the figure it can be seen that the luminescent material of the present invention has a strong emission peak at 544 nm, and its luminous intensity is equal to that of the commercial green fluorescent powder (ZnS: Cu, Au, Al). The luminescent material of the present invention has the features of high stability, high color purity and high luminous efficiency.

It should be illustrated that the luminescent spectrums for both the existing commercial green fluorescent powder (ZnS: Cu, Au, Al) provided in the example and the sodium silicate luminescent material doped with rare earth ions prepared in the example are analyzed on Shimadzu RF-5301 spectrometer through the excitation by the cathode ray under an acceleration voltage of 7.5 kV.

### Example 28: Na₃Y_{0.4}Gd_{0.2}Tb_{0.4}Si₃O₉ prepared by high temperature solid phase method

1.5 mmol Na₂CO₃, 0.2 mmol Y₂O₃, 0.1 mmol Gd₂O₃, 0.1 mmol Tb₄O₇ and 3 mmol SiO₂ are placed in an agate mortar and ground to be uniform powder at room temperature. The remaining steps are the same as those in example 24. Then the luminescent material Na₃Y_{0.4}Gd_{0.2}Tb_{0.4}Si₃O₉ which can emit a green light when excited by the cathode ray is obtained.

### Example 29: Na₃TbSi₃O₉ prepared by high temperature solid phase method

1.5 mmol Na₂CO₃, 0.25 mmol Tb₄O₇ and 3 mmol SiO₂ are placed in an agate mortar and ground to be uniform powder at room temperature. The remaining steps are the same as those in example 24. Then the luminescent material Na₃TbSi₃O₉ which can emit a green light when excited by the cathode ray is obtained.

### Example 30: K₃Y_{0.3}La_{0.3}Tb_{0.4}Si₃O₉ prepared by high temperature solid phase method

1.5 mmol K₂C₂O₄, 0.15 mmol Y₂O₃, 0.15 mmol La₂O₃, 0.1 mmol Tb₄O₇ and 3 mmol SiO₂ are placed in an agate mortar and ground to be uniform powder at room temperature. The remaining steps are the same as those in example 24. Then the luminescent material K₃Y_{0.3}La_{0.3}Tb_{0.4}Si₃O₉ which can emit a green light when excited by the cathode ray is obtained.

### Example 31: Li₃Y_{0.74}Tb_{0.26}Si₃O₉ prepared by high temperature solid phase method

1.5 mmol Li₂CO₃, 0.37 mmol Y₂O₃, 0.065 mmol Tb₄O₇ and 3 mmol SiO₂ are placed in an agate mortar and ground to be uniform powder at room temperature. The remaining steps are the same as those in example 24. Then the luminescent material Li₃Y_{0.74}Tb_{0.26}Si₃O₉ which can emit a green light when excited by the cathode ray is obtained.

### Example 32: Na₅Y_{0.74}Tb_{0.26}Si₄O₁₂ prepared by high temperature solid phase method

2.5 mmol Na₂CO₃, 0.37 mmol Y(NO₃)₃, 0.065 mmol Tb₂(CO₃)₃ and 4 mmol SiO₂ are placed in an agate mortar and ground to be uniform powder at room temperature. Then the powder is transferred to a corundum crucible and placed in a high temperature tube-type furnace with weak reducing atmosphere of 95 % N₂ and 5% H₂ to be sintered at 1115°C for 6h. A generated product during sintering is then placed in a mortar and ground to be uniform after cooling the powder to room temperature. Then the luminescent material Na₅Y_{0.74}Tb_{0.26}Si₄O₁₂ which can emit a green light when excited by the cathode ray is obtained.

### Example 33: Na₅Y_{0.2}Lu_{0.6}Tb_{0.2}Si₄O₁₂ prepared by high temperature solid phase method

2.5 mmol Na₂CO₃, 0.2 mmol YCl₃, 0.6 mmol LuCl₃, 0.2 mol TbCl₃ and 4 mmol SiO₂ are placed in an agate mortar and ground to be uniform powder at room temperature. The remaining steps are the same as those in example 32. Then the luminescent material Na₅Y_{0.2}Lu_{0.6}Tb_{0.2}Si₄O₁₂ which can emit a green light when excited by the cathode ray is obtained.

### Example 34: Na₅Y_{0.6}Tb_{0.4}Si₄O₁₂ prepared by high temperature solid phase method

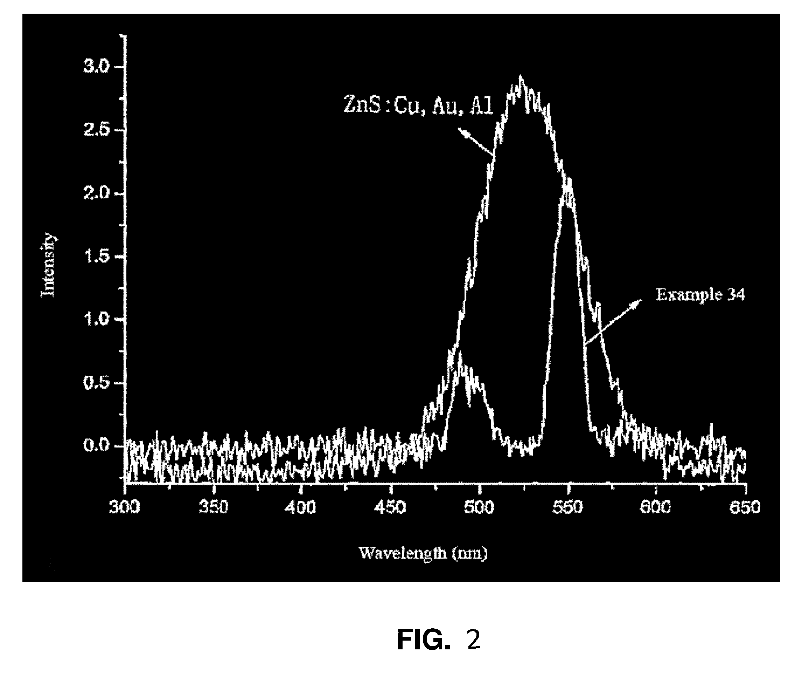

2.5 mmol Na₂CO₃, 0.3 mmol Y₂(C₂O₄)₃, 0.2 mmol Tb₂(C₂O₄)₃ and 4 mmol SiO₂ are placed in an agate mortar and ground to be uniform powder at room temperature. The remaining steps are the same as those in example 32. Then the Na₅Y_{0.6}Tb_{0.4}Si₄O₁₂ luminescent material which can emit a green light when excited by the cathode ray is obtained. In Figure 2 the comparison diagram is shown for the cathodoluminescence spectra's of existing commercial green fluorescent powder (ZnS: Cu, Au, Al) and the sodium silicate luminescent material doped with rare earth ions prepared in the example. From the figure it can be seen that the luminescent material of the present invention has a strong emission peak at 544 nm, and its luminous intensity reaches 73 % of that of the commercial green fluorescent powder (ZnS: Cu, Au, Al). The luminescent material of the present invention has the features of high stability, high color purity and high luminous efficiency.

It should be illustrated that the luminescent spectrums for both the existing commercial green fluorescent powder (ZnS: Cu, Au, Al) provided in the example and the sodium silicate luminescent material doped with rare earth ions prepared in the example are analyzed on Shimadzu RF-5301 spectrometer through the excitation by the cathode ray under an acceleration voltage of 7.5 kV.

### Example 35: K₃Y_{0.74}Tb_{0.26}Si₄O₁₂ prepared by high temperature solid phase method

2.5 mmol K₂CO₃, 0.37 mmol Y₂O₃, 0.065 mmol Tb₄O₇ and 4 mmol SiO₂ are placed in an agate mortar and ground to be uniform powder at room temperature. The remaining steps are the same as those in example 32. Then the luminescent material K₃Y_{0.74}Tb_{0.26}Si₄O₁₂ which can emit a green light when excited by the cathode ray is obtained.

### Example 36: Li₅Y_{0.74}Tb_{0.26}Si₄O₁₂ prepared by high temperature solid phase method

2.5 mmol Li₂CO₃, 0.37 mmol Y₂O₃, 0.065 mmol Tb₄O₇ and 4 mmol SiO₂ are placed in an agate mortar and ground to be uniform powder at room temperature. The remaining steps are the same as those in example 32. Then the luminescent material Li₅Y_{0.74}Tb_{0.26}Si₄O₁₂ which can emit a green light when excited by the cathode ray is obtained.

### Example 37: Na₅Y_{0.8}Gd_{0.1}Tb_{0.1}Si₄O₁₂ prepared by high temperature solid phase method

2.5 mmol Na₂CO₃, 0.4 mmol Y₂(CO₃)₃, 0.05 mmol Gd₂(CO₃)₃, 0.1 mmol Tb(NO₃)₃ and 4 mmol SiO₂ are placed in an agate mortar and ground to be uniform powder at room temperature. The remaining steps are the same as those in example 32. Then the luminescent material Na₅Y_{0.8}Gd_{0.1}Tb_{0.1}Si₄O₁₂ which can emit a green light when excited by the cathode ray is obtained.

## Claims

1. Green luminescent materials, wherein said green luminescent materials are compounds of a following general formula: M₃Y₁₋ₓTbₓSi₃O₉ or M₅Y₁₋ₓTbₓSi₄O₁₂, wherein a range of x is 0<x≤1 and M is one selected from a group of Na, K and Li.

2. The green luminescent materials according to claim 1, wherein said range of x is 0.1≤x≤0.6.

3. Green luminescent materials, wherein said green luminescent materials are compounds of a following general formula: M₃Y₁₋ₓTbₓSi₃O₉ or M₅Y₁₋ₓTbₓSi₄O₁₂, wherein a range of x is 0<x≤1, M is one selected from a group of Na, K and Li, and Y is replaced by one of Gd, Sc, Lu and La in part or in whole.

4. The green luminescent materials according to claim 3, wherein said range of x is 0.1≤x≤0.6.

5. A preparing method for the green luminescent materials of claim 1, comprising following steps:
(1) taking one of oxide, chloride, nitrate, carbonate or oxalate of Y³⁺, one of oxide, chloride, nitrate, carbonate and oxalate of Tb³⁺, silicate of M⁺ and SiO₂ as raw materials, weighing said raw materials in accordance with a molar ratio of each element in the chemical formula of M₃Y₁₋ₓTbₓSi₃O₉ or M₅Y₁₋ₓTbₓSi₄O₁₂, wherein the range of x is 0<x≤1 and M is one selected from a group of Na,K and Li;
(2) dissolving said raw materials in a hydrochloric acid or a nitric acid to form a solution when taking the oxide, carbonate or oxalate of Y³⁺ and the oxide, carbonate or oxalate of Tb³⁺ as said raw materials in step (1); directly dissolving said raw materials in water to form a solution when taking the chloride or nitrite of Y³⁺ and the chloride or nitrite of Tb³⁺ as said raw materials;
(3) dissolving the silicate of M⁺ in water, adding the SiO₂ with stirring, then adding said solution in step (2) slowly with stirring, keeping stirring for 0.5∼1.5h to obtain a sol, heating the sol at 100∼150 °C for 4∼24 h and then obtaining a xerogel;
(4) grinding said xerogel into powder, calcining said powder at a constant temperature for 4∼20 h after the temperature has been risen to 900∼1200°C at a heating rate of 60∼1000°C/h and then obtaining the green luminescent materials;
or else, grinding said xerogel into powder, processing said powder for 5-30 min under microwave with a frequency of 2450MHz and a power of 500∼1000W and then obtaining the green luminescent materials.

6. The preparing method for the green luminescent materials according to claim 5, wherein in said step (4), grinding said xerogel into powder, calcining said powder at a constant temperature for 6∼15 h after the temperature has been risen to 1000∼1150°C at a heating rate of 300∼800°C/h and then obtaining the green luminescent materials.

7. A preparing method for the green luminescent materials of claim 3, comprising following steps:
(1) taking silicate of M⁺, one of oxide, chloride, nitrate, carbonate or oxalate of Y³⁺, one of oxide, chloride, nitrate, carbonate and oxalate of Tb³⁺ and SiO₂ as raw materials, weighing said raw materials in accordance with a molar ratio of each element in the chemical formula of M₃Y₁₋ₓTbₓSi₃O₉ or M₅Y₁₋ₓTbₓSi₄O₁₂, wherein the range of x is 0<x≤1 and M is one selected from a group of Na,K and Li;
(2) dissolving said raw materials in a hydrochloric acid or a nitric acid to form a solution when taking the oxide, carbonate or oxalate of Y³⁺ and the oxide, carbonate or oxalate of Tb³⁺ as said raw materials in step (1); directly dissolving said raw materials in water to form a solution when taking the chloride or nitrite of Y³⁺ and the chloride or nitrite of Tb³⁺ as said raw materials;
(3) dissolving the silicate of M⁺ in water, adding the SiO₂ with stirring, then adding the solution in step (2) slowly with stirring, keeping stirring for 0.5∼1.5h to obtain a sol, heating the sol at 100∼150 °C for 4∼24 h and then obtaining a xerogel;
(4) grinding said xerogel into powder, calcining said powder at a constant temperature for 4∼20 h after the temperature has been risen to 900∼1200°C at a heating rate of 60∼1000°C/h and then obtaining the green luminescent materials; or else, grinding said xerogel into powder, processing said powder for 5-30 min under microwave with a frequency of 2450MHz and a power of 500∼1000W and then obtaining the green luminescent materials;
wherein, Y³⁺ in said step (1) and (2) is replaced by one of Gd³⁺, Sc³⁺, Lu³⁺ and La³⁺ in part or in whole.

8. The preparing method for the green luminescent materials according to claim 7, wherein in said step (4), grinding said xerogel into powder, calcining said powder at a constant temperature for 6∼15 h after the temperature has been risen to 1000∼1150°C at a heating rate of 300∼800°C/h and then obtaining the green luminescent materials.

9. A preparing method for the green luminescent materials of claim 1, comprising following steps:
(1) taking one of silicate and oxalate of M⁺, one of oxide, chloride, nitrate, carbonate or oxalate of Y³⁺, one of oxide, chloride, nitrate, carbonate and oxalate of Tb³⁺ and SiO₂ as raw materials, weighing the raw materials in accordance with a molar ratio of each element in the chemical formula of M₃Y₁₋ₓTbₓSi₃O₉ or M₅Y₁₋ₓTbₓSi₄O₁₂, wherein the range of x is 0<x≤1 and M is one selected from a group of Na,K and Li;
(2) grinding said raw materials into powder, sintering said powder at 1000∼1200°C for 4∼20 h, cooling the powder to room temperature and then obtaining the green luminescent materials.

10. A preparing method for the green luminescent materials of claim 3, comprising following steps:
(1) taking one of silicate and oxalate of M⁺, one of oxide, chloride, nitrate, carbonate or oxalate of Y³⁺, one of oxide, chloride, nitrate, carbonate and oxalate of Tb³⁺ and SiO₂ as raw materials, weighing the raw materials in accordance with a molar ratio of each element in the chemical formula of M₃Y₁₋ₓTbₓSi₃O₉ or M₅Y₁₋ₓTbₓSi₄O₁₂, wherein the range of x is 0<x≤1, M is one selected from a group of Na, K and Li, and Y³⁺ is replaced by one of Gd³⁺, Sc³⁺, Lu³⁺ and La³⁺ in part or in whole ;
(2) grinding the raw materials into powder, calcining the powder at 1000∼1200°C for 4∼20 h, cooling the powder to room temperature and then obtaining the green luminescent materials.
